(19) **Europäisches Patentamt / European Patent Office / Office européen des brevets**

(11) **EP 4 614 855 A1**

(12) **EUROPEAN PATENT APPLICATION**
published in accordance with Art. 153(4) EPC

(43) Date of publication:
10.09.2025 Bulletin 2025/37

(21) Application number: 23884766.9

(22) Date of filing: 27.10.2023

(51) International Patent Classification (IPC):
H04L 5/00 (2006.01)      H04W 72/0453 (2023.01)

(52) Cooperative Patent Classification (CPC):
H04L 5/00; H04W 72/0453

(86) International application number:
PCT/CN2023/127193

(87) International publication number:
WO 2024/093834 (10.05.2024 Gazette 2024/19)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(30) Priority: 04.11.2022 CN 202211377763

(71) Applicant: Huawei Technologies Co., Ltd.
Shenzhen, Guangdong 518129 (CN)

(72) Inventors:
• HOU, Hailong
  Shenzhen, Guangdong 518129 (CN)
• JIN, Zhe
  Shenzhen, Guangdong 518129 (CN)
• YU, Zheng
  Shenzhen, Guangdong 518129 (CN)
• WEN, Ronghui
  Shenzhen, Guangdong 518129 (CN)

(74) Representative: Isarpatent
Patent- und Rechtsanwälte
Barth Hassa Peckmann & Partner mbB
Friedrichstraße 31
80801 München (DE)

(54) **COMMUNICATION METHOD AND APPARATUS**

(57) This application provides a communication method and apparatus. The method includes: A terminal device receives a physical downlink data channel PDSCH from a network device; and the terminal device processes the PDSCH in first duration. A maximum bandwidth of a baseband supported by the terminal device for processing the PDSCH is X megahertz MHz, and a bandwidth of a frequency domain resource occupied by the PDSCH is Y MHz, where X is less than Y, and the first duration is greater than second duration. The second duration is time in which a second terminal device processes a second PDSCH in a baseband bandwidth not less than Y MHz, and a maximum baseband bandwidth supported by the second terminal device for processing a PDSCH is greater than the maximum baseband bandwidth supported by the first terminal device for processing a PDSCH; or the second duration is duration for processing a third PDSCH by the first terminal device, and a bandwidth of a frequency domain resource occupied by the third PDSCH is less than or equal to X MHz. A terminal device having a small baseband bandwidth can process a PDSCH through time relaxation, to improve PDSCH receiving performance.

FIG. 4

**Description**

TECHNICAL FIELD

This application relates to the field of communication technologies, and in particular, to a communication method and apparatus.

BACKGROUND

With development of communication, the International Telecommunication Union (International Telecommunication Union, ITU) has defined a massive machine type communication (massive machine type communication, mMTC) standard. Currently, further reduction of a maximum bandwidth of user equipment (user equipment, UE) is being considered in the new radio (new radio, NR) standard Rel-18 version. In the Rel-18 version, uplink and downlink radio frequency bandwidth capabilities of the UE still remain 20 MHz, only baseband bandwidth capabilities of two channels, that is, a physical downlink shared channel (physical downlink shared channel, PDSCH) and a physical uplink shared channel (physical uplink shared channel, PUSCH), are reduced, and baseband bandwidth capabilities of other uplink and downlink physical channels and signals still remain 20 MHz.

It is defined in a current NR protocol that for a terminal device in the Rel-18 version, a BWP may be configured as 20 MHz. Because the baseband bandwidth capabilities of the two channels, that is, the PDSCH and the PUSCH, of the terminal device in the Rel-18 version are only 5 MHz, how to perform data transmission with a network device is a problem to be urgently resolved.

SUMMARY

This application provides a communication method and apparatus, to improve data channel transmission performance of a terminal device.

According to a first aspect, this application provides a communication method. The method is used to implement a function of a terminal device. For example, the method may be applied to the terminal device or a chip in the terminal device. A specific execution body of the method is not limited in embodiments of this application. Optionally, the method may be jointly implemented by a plurality of functional modules on a terminal device side, and a method performed by each functional module also falls within the protection scope of this application. For example, the method is applied to a first terminal device. In the method, the first terminal device receives a physical downlink data channel PDSCH from a network device, and the first terminal device processes the PDSCH in first duration. A maximum baseband bandwidth for processing the PDSCH by the first terminal device is X megahertz MHz, and a bandwidth of a frequency domain resource occupied by the PDSCH is Y MHz, where X is less than Y, and the first duration is greater than second duration.

According to the foregoing method, for a terminal device in a small maximum baseband bandwidth for processing a PDSCH, processing of the PDSCH may be completed through time relaxation. A frequency domain bandwidth of the PDSCH is greater than the maximum baseband bandwidth supported by the terminal device for processing the PDSCH. In this way, data channel receiving performance of the terminal device is improved.

With reference to the first aspect, in a possible design, the second duration is time required by a second terminal device to process a second PDSCH in a baseband bandwidth not less than Y MHz. In another possible design, the second duration is duration for processing a third PDSCH by the first terminal device, and a bandwidth of a frequency domain resource occupied by the third PDSCH is less than or equal to X MHz. The first duration may be understood as time actually required by the first terminal device to process the first PDSCH. In other words, the first terminal device processes a PDSCH that exceeds a capability range by extending a processing time. Further, a maximum baseband bandwidth supported by the second terminal device for processing a PDSCH is greater than a maximum baseband bandwidth supported by the first terminal device for processing a PDSCH.

With reference to the first aspect, in a possible design, the first duration is predefined or preset, and the first duration is determined according to a predefined rule, or the first duration is determined based on signaling from the network device.

With reference to the first aspect, in a possible design, the first duration T1 and the second duration T2 satisfy: T1 = A * T2, where A is greater than 1; or T1 = T2 + offset, where offset is N time units, and N is a positive integer.

Further, A and N may be determined based on a ratio of Y to X, for example, A = Y/X, or N = Y/X.

With reference to the first aspect, in a possible design, a maximum bandwidth that is of post-fast Fourier transform data buffering (post-FFT data buffering) and that is supported by the first terminal device for processing a PDSCH is not less than Y MHz. Optionally, X = 5, and Y = 20.

With reference to the first aspect, in a possible design, the method further includes: The first terminal device sends first information to the network device. The first information indicates a post-FFT data buffering bandwidth capability of the first terminal device. Further, before this, the first terminal device further receives first indication information from the network device. The first indication information indicates to report the post-FFT data buffering bandwidth capability.

With reference to the first aspect, in a possible design, the method further includes: The first terminal device sends second information to the network device. The second information indicates that the first terminal device supports processing a PDSCH in the first duration. Further, before this, the first terminal device receives second indication information from the network device. The second indication information indicates to report whether processing the PDSCH in the first duration is supported, or indicates whether processing the PDSCH in relaxed processing duration is supported.

With reference to the first aspect, in a possible design, the method further includes: The first terminal device sends third information to the network device. The third information indicates the first duration.

With reference to the first aspect, in a possible design, the first information, the second information, and/or the third information are/is carried in at least one of the following: a physical random access channel PRACH; a message A Msg A in a random access procedure; a message 3 Msg 3 in a random access procedure; or a radio resource control RRC message.

By exchanging capability information of the terminal device, the network device may learn of a data channel processing capability of the terminal device, to properly predict time for receiving feedback information after the PDSCH is sent, thereby avoiding scheduling the first terminal device in a process in which the first terminal device processes the PDSCH, avoiding unnecessary resource waste, and ensuring transmission performance of the terminal device.

With reference to the first aspect, in a possible design, the method further includes: sending receiving status information of the first PDSCH based on third duration, where the third duration is not less than the first duration.

According to the foregoing method, the terminal device may process the PDSCH within a capability range without consuming an additional processing time, and the network device does not need to re-estimate a processing time of the terminal device, to reduce implementation complexity on a network side. In addition, through capability interaction between the terminal device and the network device, the network device may deliver a PDSCH based on a processing capability of the terminal device, or determine time for receiving the feedback information from the terminal device.

According to a second aspect, this application provides a communication method. The method is used to implement a function of a network device side. For example, the method may be applied to a network device or a chip in the network device. A specific execution body of the method is not limited in embodiments of this application. Optionally, the method may be jointly implemented by a plurality of functional modules on the network device side, and a method performed by each functional module also falls within the protection scope of this application. For example, the method is applied to a network device. In the method, the network device sends a first PDSCH to a first terminal device, and the network device receives feedback information from the first terminal device in response to the first PDSCH. An interval between a sending time of the PDSCH and a receiving time of the feedback information is greater than or equal to first duration, the first duration is greater than second duration, a baseband bandwidth for processing the first PDSCH by the first terminal device is X megahertz MHz, and a bandwidth of a frequency domain resource occupied by the PDSCH is Y MHz.

According to the foregoing method, for a terminal device in a small maximum baseband bandwidth for processing a PDSCH, processing of the PDSCH may be completed through time relaxation. A frequency domain bandwidth of the PDSCH is greater than the maximum baseband bandwidth supported by the terminal device for processing the PDSCH. In this way, data channel receiving performance of the terminal device is improved, and the network device may predict the receiving time of the feedback information, to better allocate a communication resource.

With reference to the second aspect, in a possible design, the second duration is time required by a second terminal device to process a second PDSCH in a baseband bandwidth not less than Y MHz. In another possible design, the second duration is duration for processing a third PDSCH by the first terminal device in a baseband bandwidth of X MHz, and a bandwidth of a frequency domain resource occupied by the third PDSCH is less than or equal to X MHz. The first duration may be understood as time actually required by the first terminal device to process the first PDSCH. In other words, the first terminal device processes a PDSCH that exceeds a capability range by extending a processing time. Further, a maximum baseband bandwidth supported by the second terminal device for processing a PDSCH is greater than a maximum baseband bandwidth supported by the first terminal device for processing a PDSCH.

With reference to the second aspect, in a possible design, the first duration is predefined or preset, and the first duration is determined according to a predefined rule, or the first duration is determined based on signaling from the network device.

With reference to the second aspect, in a possible design, the first duration T1 and the second duration T2 satisfy: T1 = A * T2, where A is greater than 1; or T1 = T2 + offset, where offset is N time units, and N is a positive integer.

Further, A and N may be determined based on a ratio of Y to X, for example, A = Y/X, or N = Y/X.

With reference to the second aspect, in a possible design, a maximum bandwidth that is of post-fast Fourier transform data buffering (post-FFT data buffering) and that is supported by the first terminal device for processing a PDSCH is not less than Y MHz. Optionally, X = 5, and Y = 20.

With reference to the second aspect, in a possible design, the method further includes: The network device receives first information from the first terminal device. The first information indicates a post-FFT data buffering bandwidth capability of the first terminal device. Further, before this, the network device sends first indication information to the first terminal device. The first indication information indicates to report the post-FFT data buffering bandwidth capability.

With reference to the second aspect, in a possible design, the method further includes: The network device receives second information from the first terminal device. The second information indicates that the first terminal device supports processing a PDSCH in the first duration, or the second information indicates that the first terminal device supports processing the PDSCH through time relaxation. Further, before this, the network device sends second indication information to the first terminal device. The second indication information indicates to report whether processing the PDSCH in the first duration is supported, or indicates whether processing the PDSCH in relaxed processing duration is supported.

With reference to the second aspect, in a possible design, the method further includes: The network device receives third information from the first terminal device. The third information indicates the first duration.

With reference to the second aspect, in a possible design, the first information, the second information, and/or the third information are/is carried in at least one of the following: a physical random access channel PRACH; a message A Msg A in a random access procedure; a message 3 Msg 3 in a random access procedure; or a radio resource control RRC message.

By exchanging capability information of the terminal device, the network device may learn of a data channel processing capability of the terminal device, to properly predict time for receiving the feedback information after the PDSCH is sent, thereby avoiding scheduling the first terminal device in a process in which the first terminal device processes the PDSCH, avoiding unnecessary resource waste, and ensuring transmission performance of the terminal device.

With reference to the second aspect, in a possible design, the method further includes: receiving receiving status information of the first PDSCH based on third duration, where the third duration is not less than the first duration.

According to the foregoing method, the terminal device may process the PDSCH within a capability range without consuming an additional processing time, and the network device does not need to re-estimate a processing time of the terminal device, to reduce implementation complexity on a network side. In addition, through capability interaction between the terminal device and the network device, the network device may deliver a PDSCH based on a processing capability of the terminal device, or determine time for receiving the feedback information from the terminal device.

According to a third aspect, this application provides a communication method. The method is used to implement a function of a terminal device. For example, the method may be applied to the terminal device or a chip in the terminal device. A specific execution body of the method is not limited in embodiments of this application. Optionally, the method may be jointly implemented by a plurality of functional modules on a terminal device side, and a method performed by each functional module also falls within the protection scope of this application. For example, the method is applied to a first terminal device. In the method, the first terminal device receives a physical downlink data channel PDSCH from a network device. A baseband bandwidth X megahertz MHz for processing the PDSCH by the first terminal device is less than a bandwidth Y MHz of a first frequency domain resource occupied for transmitting the PDSCH, the first terminal device processes only a first part of the PDSCH, and a bandwidth of a frequency domain resource occupied by the first part does not exceed X MHz.

The foregoing method is applicable to a terminal device having a post-FFT buffer bandwidth capability of Y MHz but having a small baseband bandwidth capability for processing the PDSCH, and is also applicable to a terminal device having a post-FFT buffer bandwidth of X MHz. For the latter terminal device, because the post-FFT buffer bandwidth capability is insufficient, complete PDSCH information cannot be buffered, and which part of the PDSCH information to be processed needs to be selected, to maximize receiving performance.

With reference to the third aspect, in a possible design, the method further includes: The first terminal device determines the first part according to a predefined rule; or the first terminal device determines the first part based on first signaling from the network device. The first signaling is a system information block SIB, an RRC message, a medium access control control element MAC CE, or downlink indication information DCI.

With reference to the third aspect, in a possible design, the first part is a lowest X MHz in the first frequency domain resource, or the first part is a highest X MHz in the first frequency domain resource.

With reference to the third aspect, in a possible design, the method further includes: that the first terminal device receives a physical downlink data channel PDSCH from a network device includes: The first terminal device receives the physical downlink data channel PDSCH from the network device in a first slot, and the first terminal device receives a physical downlink control channel PDCCH from the network device in a second slot. DCI carried on the PDCCH is used to schedule the PDSCH, where the first slot and the second slot are different slots. The PDCCH and the PDSCH scheduled by the PDCCH are sent in different slots, so that time for demodulating and decoding the PDCCH may be reserved for the first terminal device, and time-frequency resource allocation information of the PDSCH indicated by the DCI carried on the PDCCH is obtained, to improve a success rate of receiving the PDSCH by the terminal device and improve communication efficiency.

The third aspect may be further implemented with reference to various possible designs in the first aspect.

According to a fourth aspect, this application provides a communication method. The method is used to implement interaction between a network device side and a terminal device. For example, the method includes a network device or a chip in the network device, and a terminal device or a chip of the terminal device. A specific execution body of the method is not limited in embodiments of this application. Optionally, the method may be jointly implemented by a plurality of functional modules in an apparatus, and a method performed by each functional module also falls within the protection scope of this application. For example, the method is applied to a network device and a first terminal device. In the method, the network device sends a physical downlink data channel PDSCH to a first terminal device, and the first terminal device receives the PDSCH from the network device. A baseband bandwidth X megahertz MHz for processing the PDSCH by the first terminal device is less than a bandwidth Y MHz of a first frequency domain resource occupied for transmitting the PDSCH, the first terminal device processes only a first part of the PDSCH, and a bandwidth of a frequency domain resource occupied by the first part does not exceed X MHz.

According to the foregoing method, for a terminal device in a small maximum baseband bandwidth for processing a PDSCH, processing of the PDSCH may be completed through time relaxation. A frequency domain bandwidth of the PDSCH is greater than the maximum baseband bandwidth supported by the terminal device for processing the PDSCH. In this way, data channel receiving performance of the terminal device is improved, and the network device may predict the receiving time of the feedback information, to better allocate a communication resource.

With reference to the fourth aspect, in a possible design, the method further includes: The first terminal device determines the first part according to a predefined rule; or the first terminal device determines the first part based on first signaling from the network device. The first signaling is a system information block SIB, an RRC message, a medium access control control element MAC CE, or downlink indication information DCI.

With reference to the fourth aspect, in a possible design, the first part is a lowest X MHz in the first frequency domain resource, or the first part is a highest X MHz in the first frequency domain resource.

With reference to the fourth aspect, in a possible design, the method further includes: that the first terminal device receives a physical downlink data channel PDSCH from a network device includes: The first terminal device receives the physical downlink data channel PDSCH from the network device in a first slot, and the first terminal device receives a physical downlink control channel PDCCH from the network device in a second slot. DCI carried on the PDCCH is used to schedule the PDSCH, where the first slot and the second slot are different slots. The PDCCH and the PDSCH scheduled by the PDCCH are sent in different slots, so that time for demodulating and decoding the PDCCH may be reserved for the first terminal device, and time-frequency resource allocation information of the PDSCH indicated by the DCI carried on the PDCCH is obtained, to improve a success rate of receiving the PDSCH by the terminal device and improve communication efficiency.

The fourth aspect may be further implemented with reference to various possible designs in the first aspect and the second aspect.

According to a fifth aspect, an embodiment of this application provides a communication apparatus. The communication apparatus may be a terminal device, a module that can implement a function on a terminal device side, or a chip that can be disposed inside the terminal device. The communication apparatus has a function of implementing the first aspect. For example, the communication apparatus includes a corresponding module, unit, or means (means) for performing a part or all of the steps in the first aspect. The function, unit, or means may be implemented by using software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive configuration information from a network device. The processing unit may be configured to perform some internal operations of the communication apparatus. Functions performed by the processing unit and the communication unit may correspond to the first aspect and the possible designs of the first aspect.

For example, the communication apparatus is a terminal device or a chip in the terminal device, and includes a communication unit and a processing unit. The communication unit is configured to receive a physical downlink data channel PDSCH from a network device. The processing unit is configured to process the PDSCH in first duration. A maximum baseband bandwidth for processing the PDSCH by the first terminal device is X megahertz MHz, and a bandwidth of a frequency domain resource occupied by the PDSCH is Y MHz, where X is less than Y, and the first duration is greater than second duration.

In a possible design, the communication apparatus includes a processor, and may further include a transceiver. The transceiver is configured to receive and send a signal. The processor uses the transceiver to complete the method according to any possible design or implementation corresponding to the terminal device in the first aspect, the third aspect, and the fourth aspect. The communication apparatus may further include one or more memories. The memory is configured to be coupled to the processor, and the memory may store a computer program or instructions for implementing the function in the first aspect. The processor may execute the computer program or the instructions stored in the memory, and when the computer program or the instructions are executed, the communication apparatus is enabled to implement the method according to any possible design or implementation corresponding to the terminal device in the first aspect, the third aspect, and the fourth aspect.

In a possible design, the communication apparatus includes a processor, and the processor may be configured to be coupled to a memory. The memory may store a computer program or instructions for implementing a function corresponding to the terminal device in the first aspect, the third aspect, and the fourth aspect. The processor may execute the computer program or the instructions stored in the memory, and when the computer program or the instructions are executed, the communication apparatus is enabled to implement the method according to any possible design or implementation corresponding to the terminal device in the first aspect, the third aspect, and the fourth aspect.

In a possible design, the communication apparatus includes a processor and an interface circuit. The processor is configured to: communicate with another apparatus by using the interface circuit, and perform the method according to any possible design or implementation corresponding to the terminal device in the first aspect, the third aspect, and the fourth aspect.

According to a sixth aspect, an embodiment of this application provides a communication apparatus. The communication apparatus may be a network device, a module that can implement a function on a network device side, or a chip that can be disposed inside the network device. The communication apparatus can implement a function corresponding to the network device in the second aspect or the fourth aspect. For example, the communication apparatus includes a corresponding module, unit, or means for performing a part or all of the operations corresponding to the network device in the second aspect or the fourth aspect. The module, unit, or means may be implemented by using software or hardware, or may be implemented by hardware executing corresponding software.

In a possible design, the communication apparatus includes a processing unit and a communication unit. The communication unit may be configured to receive and send a signal, to implement communication between the communication apparatus and another apparatus. For example, the communication unit is configured to receive uplink information from a terminal device. The processing unit may be configured to perform some internal operations of the communication apparatus. Functions performed by the processing unit and the communication unit may correspond to the operations of the network device in the second aspect or the fourth aspect.

For example, a communication apparatus includes a communication unit and a processing unit. The processing unit is configured to send first configuration information to a terminal device by using the communication unit. The first configuration information indicates a first time period, and the first time period is a time period used by the terminal device to perform non-interval measurement based on an SSB. The communication unit is configured to: send a first PDSCH to a first terminal device, and receive feedback information from the first terminal device in response to the first PDSCH. An interval between a sending time of the PDSCH and a receiving time of the feedback information is greater than or equal to first duration, the first duration is greater than second duration, a baseband bandwidth for processing the first PDSCH by the first terminal device is $X$ megahertz MHz, and a bandwidth of a frequency domain resource occupied by the PDSCH is $Y$ MHz.

In a possible design, the communication apparatus includes a processor, and may further include a transceiver. The transceiver is configured to send and receive a signal. The processor uses the transceiver to complete the method according to any possible design or implementation corresponding to the network device in the second aspect or the fourth aspect. The communication apparatus may further include one or more memories. The memory is configured to be coupled to the processor, and the memory may store a computer program or instructions for implementing the function corresponding to the network device in the second aspect or the fourth aspect. The processor may execute the computer program or the instructions stored in the memory. When the computer program or the instructions are executed, the communication apparatus is enabled to implement the method according to any possible design or implementation in the second aspect.

In a possible design, the communication apparatus includes a processor, and the processor may be configured to be coupled to a memory. The memory may store a computer program or instructions for implementing the function corresponding to the network device in the second aspect or the fourth aspect. The processor may execute the computer program or the instructions stored in the memory. When the computer program or the instructions are executed, the communication apparatus is enabled to implement the method according to any possible design or implementation corresponding to the network device in the second aspect or the fourth aspect.

In a possible design, the communication apparatus includes a processor and an interface circuit. The processor is configured to: communicate with another apparatus by using the interface circuit, and perform the method according to any possible design or implementation corresponding to the network device in the second aspect or the fourth aspect.

It may be understood that, the processor may be implemented by using hardware or software. When the processor is implemented by using the hardware, the processor may be a logic circuit, an integrated circuit, or the like. When the processor is implemented by using the software, the processor may be a general-purpose processor, and is implemented by reading software code stored in a memory. In addition, there may be one or more processors and one or more memories. The memory may be integrated with the processor, or the memory and the processor are separately disposed. In a specific implementation process, the memory and the processor may be integrated into one chip, or may be disposed on different chips. A type of the memory and a manner in which the memory and the processor are disposed are not limited in embodiments of this application.

According to a seventh aspect, an embodiment of this application provides a communication system. The communication system includes the communication apparatus according to the first aspect and the communication apparatus according to the second aspect, or the communication system includes a network device and the terminal device according to the third aspect.

According to an eighth aspect, an embodiment of this application provides a computer-readable storage medium. The computer storage medium stores computer-readable instructions. When a computer reads and executes the computer-readable instructions, the computer is enabled to implement the method according to any one of the possible designs in the first aspect to the fourth aspect.

According to a ninth aspect, an embodiment of this application provides a computer program product. When a computer reads and executes the computer program product, the computer is enabled to implement the method according to any one of the possible designs in the first aspect to the fourth aspect.

According to a tenth aspect, an embodiment of this application provides a chip. The chip includes a processor. The processor is coupled to a memory and is configured to read and execute a software program stored in the memory, to implement the method according to any one of the possible designs in the first aspect to the fourth aspect.

BRIEF DESCRIPTION OF DRAWINGS

FIG. 1 is a diagram of a communication system to which this application is applicable;
FIG. 2 is a diagram of a radio frequency bandwidth and a baseband bandwidth;
FIG. 3A is a diagram of a PDSCH processing method according to this application;
FIG. 3B is a diagram of another PDSCH processing method according to this application;
FIG. 4 is a schematic flowchart of a communication method according to this application;
FIG. 5 is a schematic flowchart of another communication method according to this application;
FIG. 6 is a schematic flowchart of still another communication method according to this application;
FIG. 7 is a schematic flowchart of yet another communication method according to this application;
FIG. 8 is a diagram of an apparatus according to this application; and
FIG. 9 is a diagram of another apparatus according to this application.

DESCRIPTION OF EMBODIMENTS

The following describes in detail embodiments of this application with reference to the accompanying drawings of the specification.

Embodiments of this application may be applied to various mobile communication systems, for example, the 5th generation (the 5th generation, 5G) mobile communication network or a new radio (new radio, NR) system, the 4G mobile communication network or a long term evolution (long term evolution, LTE) system, and another communication system such as a future communication system. This is not specifically limited herein.

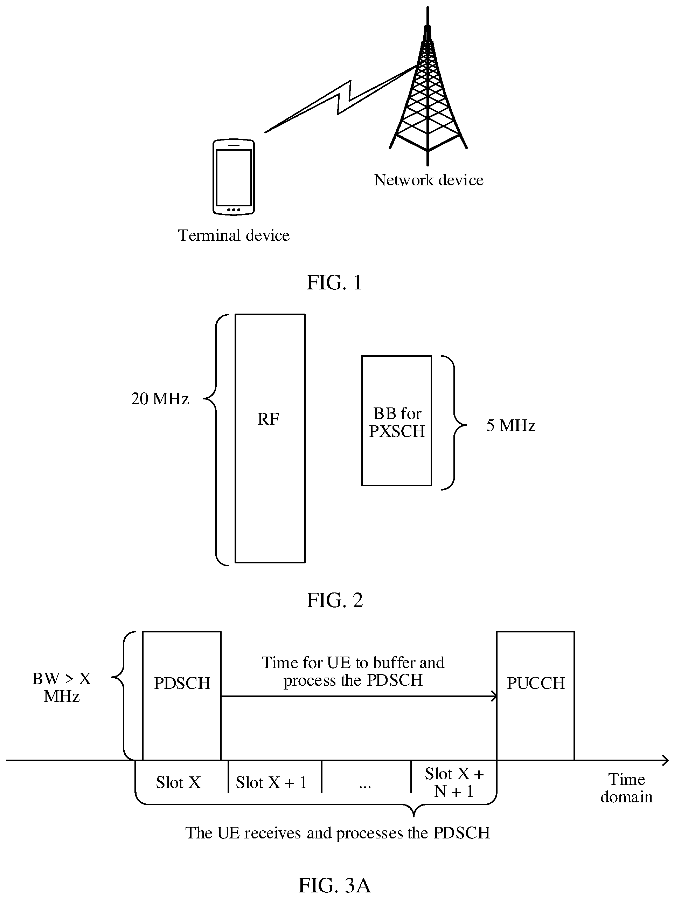

FIG. 1 is a diagram of a communication system to which this application is applicable. The system includes at least one network device, for example, a network device shown in FIG. 1. The system may further include at least one terminal device, for example, a terminal device shown in FIG. 1. The network device may communicate with the terminal device through a radio link, to exchange information. It may be understood that, the network device and the terminal device may also be referred to as communication devices.

In embodiments of this application, the terminal device is a user-side device having a wireless transceiver function, and may be a fixed device, a mobile device, a handheld device (for example, a mobile phone), a wearable device, a vehicle-mounted device, or a wireless apparatus (for example, a communication module, a modem, or a chip) disposed in the foregoing device. The terminal device may also be referred to as a terminal, user equipment (user equipment, UE), an access terminal, or the like. The terminal device is configured to connect people, things, machines, and the like, and may be widely used in various scenarios, for example, cellular communication, device-to-device (device-to-device, D2D) communication, V2X communication, machine-to-machine/machine-type communication (machine-to-machine/machine-type communication, M2M/MTC) communication, internet of things, virtual reality (virtual reality, VR), augmented reality (augmented reality, AR), industrial control (industrial control), industrial sensing, self-driving (self-driving), remote medical (remote medical), a smart grid (smart grid), smart furniture, a smart office, smart wearables, smart surveillance, smart transportation, a smart city (smart city), an uncrewed aerial vehicle, and a robot. In embodiments of this application, an apparatus configured to implement a function of the terminal device may be a terminal device; or may be an apparatus that can support the terminal device in implementing the function, for example, a chip system. The apparatus may be installed in the terminal device or used in matching with the terminal device. The terminal device in this application may be a legacy (legacy) terminal device, a reduced capability (reduced capability, REDCAP) terminal device, an enhanced reduced capability (enhanced reduced capability, eREDCAP) terminal device, or a further reduced capability (further reduced capability, fREDCAP) terminal device. The legacy terminal device may be a legacy capability terminal device, a normal capability terminal device, or a high capability terminal device, or may be referred to as a normal (normal) terminal device. In this application, the legacy terminal device may include an NR enhanced mobile broadband (enhanced mobile broadband, eMBB) terminal device and an ultra-reliable low-latency communication (ultra-reliable low-latency communication, URLLC) terminal device. The NR eMBB terminal device supports a large bandwidth and has a high processing capability. The REDCAP terminal device is a terminal device defined in the 3rd generation partnership project (the 3rd generation partnership project, 3GPP) release-17 (release-17, Rel-17) and 18. The reduced capability (reduced capability, REDCAP) terminal device (REDCAP UE) may have at least one of the following features.

(1) A maximum bandwidth at a frequency range (frequency range, FR) 1 during initial access and/or after initial access does not exceed 20 MHz. A maximum bandwidth at an FR 2 during initial access and/or after initial access does not exceed 100 MHz.
(2) A minimum quantity of supported receiving antenna (Rx) branches is 1.
(3) A protocol version is NR Rel-17 or later.
(4) Only half-duplex frequency division duplex (frequency division duplex, FDD) is supported.
(5) If there is one Rx branch, one downlink (downlink, DL) maximum multiple-in multiple-out (multiple-in multiple-out, MIMO) layer is supported. If there are two Rx branches, two DL MIMO layers are supported.

The reduced capability terminal device may be understood as a terminal device with a reduced capability compared with the legacy terminal device (legacy UE). The capability includes but is not limited to features in the foregoing five aspects.

The network device is a network side device having a wireless transceiver function. The network device may be an apparatus that is in a radio access network (radio access network, RAN) and that provides a wireless communication function for the terminal device, and is referred to as a RAN device. For example, the network device may be a base station (base station), an evolved NodeB (evolved NodeB, eNodeB), a next generation NodeB (next generation NodeB, gNB) in a 5G mobile communication system, a subsequent evolved 3GPP base station, a transmission reception point (transmission reception point, TRP), an access node in a Wi-Fi system, a wireless relay node, or a wireless backhaul node. In communication systems using different radio access technologies (radio access technologies, RATs), names of devices having base station functions may be different. For example, a base station may be referred to as an eNB or an eNodeB in an LTE system, and may be referred to as a gNB in a 5G system or an NR system. A specific name of the base station is not limited in this application. The network device may include one or more co-site or non-co-site transmission reception points. For another example, the network device may include one or more central units (central units, CUs), one or more distributed units (distributed units, DUs), or one or more CUs and one or more DUs. For example, functions of the CU may be implemented by one entity or different entities. For example, the functions of the CU are further divided. In other words, a control plane and a user plane are separated and implemented by different entities, which are respectively a control plane CU entity (namely, a CU-CP entity) and a user plane CU entity (namely, a CU-UP entity). The CU-CP entity and the CU-UP entity may be coupled to the DU, to jointly complete a function of an access network device. In this way, some functions of a radio access network device may be implemented by a plurality of network function entities. These network function entities may be network elements in a hardware device, or may be software functions run on dedicated hardware, or may be virtualized functions instantiated on a platform (for example, a cloud platform). For another example, in a vehicle to everything (vehicle to everything, V2X) technology, the access network device may be a road side unit (road side unit, RSU). A plurality of access network devices in the communication system may be base stations of a same type, or may be base stations of different types. The base station may communicate with the terminal device, or may communicate with the terminal device via a relay station. In embodiments of this application, the apparatus configured to implement a function of the network device may be the network device, or may be an apparatus that can support the network device in implementing the function, for example, a chip system or a combined device or component that can implement a function of the access network device. The apparatus may be installed in the network device. In embodiments of this application, the chip system may include a chip, or may include a chip and another discrete device. In embodiments of this application, the network device is used as an example to describe the technical solution.

The terms "system" and "network" may be used interchangeably in embodiments of this application. "At least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. A character "/" generally indicates an "or" relationship between the associated objects. "At least one of the following items (pieces)" or a similar expression thereof indicates any combination of these items, including a single item (piece) or any combination of a plurality of items (pieces). For example, at least one of a, b, or c may indicate: a, b, c, a and b, a and c, b and c, or a, b, and c, where a, b, and c may be singular or plural.

Unless otherwise stated on the contrary, ordinal terms such as "first" and "second" mentioned in embodiments of this application are used to distinguish between a plurality of objects, and are not intended to limit sizes, content, a sequence, a time sequence, priorities, importance degrees, or the like of the plurality of objects. For example, a first threshold and a second threshold are merely used to distinguish between different thresholds, and do not indicate sizes, content, different priorities, different importance, or the like of the two thresholds.

The following describes some terms in embodiments of this application, to facilitate understanding of a person skilled in the art.

(1) Bandwidth part (bandwidth part, BWP)

To support terminal devices with different bandwidth capabilities and reduce power consumption of the terminal devices, a concept of a BWP is introduced into NR. The BWP is a segment of contiguous resources in frequency domain, and includes an uplink BWP and a downlink BWP, which are respectively used for uplink transmission and downlink transmission. In an initial access phase, a network device configures an initial uplink BWP and an initial downlink BWP for a terminal device. After entering an RRC connected mode, the network device additionally configures, for the terminal device, one or more uplink BWPs and downlink BWPs dedicated to the terminal device.

According to a protocol, uplink channel or signal transmission is performed in the uplink BWP, and downlink channel or signal transmission is performed in the downlink BWP. If the terminal device receives a plurality of BWP configurations, the terminal device can operate on only one of the BWPs at a same moment, and the BWP is referred to as an active BWP (active BWP). Currently, it is agreed that the terminal device can perform data transmission with the network device only by using the active BWP. In other words, a frequency resource corresponding to each data transmission of the terminal device can be in a frequency resource range corresponding to only one BWP. It should be noted that, in evolution of a subsequent version or in another communication system, the active BWP may also have different names. This is not limited herein.

(2) Baseband bandwidth (baseband bandwidth, BB Bandwidth)

In the NR system, a signal processing part of the terminal device includes a radio frequency processing unit and a baseband processing unit. The baseband processing unit may include digital-to-analog conversion (ADC)/analog-to-digital conversion (DAC), fast Fourier transform (FFT)/inverse fast Fourier transform (IFFT), post-FFT data buffering (post-FFT data buffering), a receiving processing block (receiving processing block), LDPC decoding (LDPC decoding), hybrid automatic repeat request buffer (HARQ buffer), downlink control processing and decoder (DL control processing and decoder), an uplink processing (UL processing) block, a MIMO specific processing block (MIMO specific processing block), a synchronization/cell search block (Synchronization/cell search block), and other functional modules. For different terminal devices, software and hardware implementations may be different, and support and implementations of the foregoing functional modules of baseband may also be different. This is not limited in this application. A baseband bandwidth capability of the terminal device may be understood as bandwidth capabilities of all or some of the foregoing radio frequency functional blocks and baseband modules.

Currently, the terminal device may have different baseband processing capabilities for different channels. For example, for a data channel (for example, a PDSCH and a PUSCH), a baseband processing bandwidth of a RedCap terminal device is 5 MHz, and for another physical channel or signal, a baseband processing capability of the RedCap terminal device is 20 MHz. Further, for the data channel, a bandwidth of post-FFT data buffering in a baseband processing module of the terminal device may be different from a bandwidth of another baseband module. For example, the bandwidth of the post-FFT data buffering is 20 MHz, and the bandwidth of another baseband module is 5 MHz.

(3) Radio frequency bandwidth (radio frequency bandwidth, RF bandwidth)

The radio frequency processing unit may include an antenna array, a power amplifier, a filter, a transmitter, a duplexer, a converter, or another functional module, and is configured to receive and send information. For different terminal devices, software and hardware implementations may be different, and support and implementations of the foregoing functional modules of radio frequency may also be different. This is not limited in this application.

(4) Post-fast Fourier transform data buffering (post-FFT data buffering)

For a downlink signal, a receiving processing procedure of the terminal device is as follows: A radio frequency part is used to receive the downlink signal, after being sampled through ADC, a received analog signal is converted into a digital signal, the digital signal is converted from time domain to frequency domain after FFT processing, and an obtained frequency domain signal is stored in a buffer module for other processing. For example, code block processing including channel estimation, channel equalization, and demodulation is performed by using a receiving processing block, channel decoding is performed by using a decoding module, and the like. The buffer module may be, for example, a post-FFT buffer, and is configured to buffer a result obtained through performing fast Fourier transform on data for subsequent further processing.

As shown in FIG. 2, in a possible scenario, an RF bandwidth capability of the terminal device is 20 megahertz (MHz), and a baseband bandwidth used to process a PDSCH and/or a PUSCH (shown as a PXSCH in the figure) is 5 MHz. In this case, when a frequency domain resource occupied by a PDSCH sent by the network device to the terminal device is 20 MHz, the terminal device may receive a complete PDSCH by using an RF processing unit, but cannot process the entire PDSCH at a time due to insufficient capability of a baseband processing unit. Therefore, for a terminal device with an RF bandwidth capability greater than a baseband bandwidth capability for processing a data channel, how to process the data channel becomes a technical problem that needs to be urgently resolved. A plurality of embodiments provided in this application are all applicable to processing of an uplink data channel and/or a downlink data channel, for example, a PDSCH and/or a PUSCH. For ease of description, only the PDSCH is used as an example for description. It should be understood that the following method may also be applied to processing of the PUSCH.

For this technical problem, this application proposes a communication method in which a terminal device can complete processing of the PDSCH through time relaxation, to improve PDSCH receiving performance. As shown in FIG. 3A, a terminal device may process different parts of the PDSCH in a plurality of time units, or complete different processing of the PDSCH in a plurality of time units, and implement complete processing of the PDSCH with a small baseband processing capability by extending a processing time.

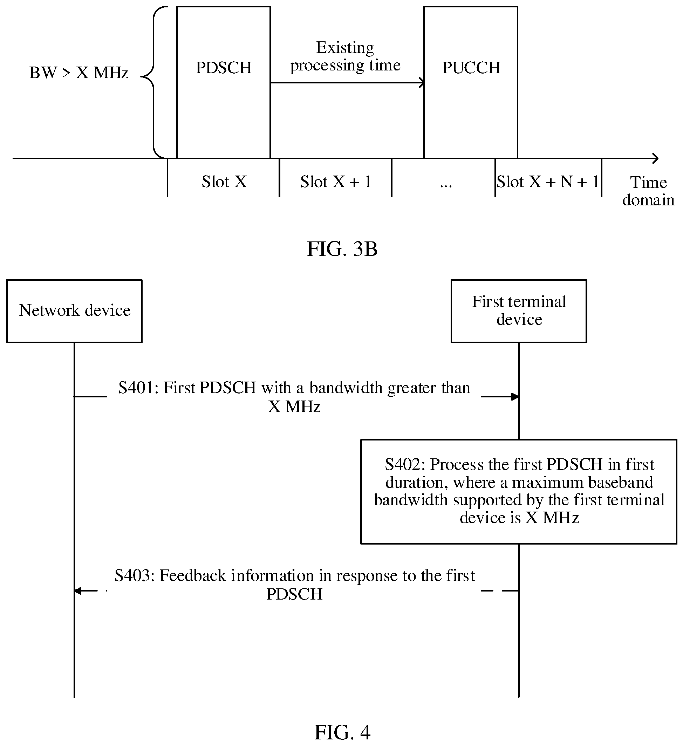

Specifically, FIG. 4 is a schematic flowchart of a communication method according to an embodiment of this application. The method includes the following steps.

S401: A network device sends a first PDSCH to a first terminal device; and accordingly, the first terminal device receives the first PDSCH from the network device.

S402: The first terminal device processes the first PDSCH in first duration.

Optionally, S403: The first terminal device sends feedback information in response to the first PDSCH to the network device; and accordingly, the network device receives the feedback information from the first terminal device.

For S401: The network device sends the first PDSCH to the first terminal device; and accordingly, the first terminal device receives the first PDSCH from the network device.

A maximum baseband bandwidth supported by the first terminal device is X megahertz MHz. The "maximum baseband bandwidth" may also be replaced with a "maximum bandwidth of a baseband", a "baseband processing capability", a "maximum baseband bandwidth", or the like. Further, for the PDSCH, the maximum baseband bandwidth supported by the terminal device may also be described as a maximum baseband bandwidth supported by the terminal device for processing the PDSCH. In a plurality of embodiments provided in this application, it may be understood that a baseband bandwidth for processing the first PDSCH by the first terminal device is X MHz, where X is less than a frequency domain bandwidth (Y MHz) of the first PDSCH; or a maximum baseband bandwidth supported by the first terminal device for processing the PDSCH is X MHz (or a baseband bandwidth capability for processing the PDSCH is X MHz), where X is less than the frequency domain bandwidth (Y MHz) of the first PDSCH. A "bandwidth" in the following may be a maximum bandwidth used in a specific processing process, or may be replaced with a processing capability supported by a terminal device, for example, a post-FFT buffer bandwidth.

The bandwidth of a frequency domain resource occupied by the first PDSCH is Y MHz, where X is less than Y. Optionally, X = 5, and Y = 20. For example, a bandwidth of a PDSCH sent by a base station to UE is 20 MHz, and a maximum baseband bandwidth used by the UE to process the PDSCH is 5 MHz.

It should be noted that the bandwidth may also be described as a quantity of resource blocks (resource blocks, RBs) included in the bandwidth. For example, if a subcarrier spacing is 15 kHz, a quantity of RBs corresponding to 5 MHz may be 25, 26, 27, or 28. If the subcarrier spacing is 30 kHz, the quantity of RBs corresponding to 5 MHz may be 11, 12, 13, or 14.

Optionally, the method further includes step S4011: The network device sends a second PDSCH to a second terminal device, and the second terminal device receives the second PDSCH from the network device. A baseband bandwidth capability of the second terminal device for processing the second PDSCH is greater than or equal to Y MHz. For example, the baseband bandwidth capability of the second terminal device for processing the PDSCH is 100 MHz or 20 MHz. For example, the second terminal device may be a legacy terminal device (legacy UE) or an R17 reduced capability terminal device (R17 Redcap UE), and the first terminal device may be R18 Redcap UE. The first PDSCH and the second PDSCH may be a same PDSCH or different PDSCHs.

For S402: The first terminal device processes the first PDSCH in the first duration.

The first duration is less than second duration, the second duration is duration in which the first terminal device processes a third PDSCH with a baseband bandwidth capability of X MHz, and a bandwidth of a frequency domain resource occupied by the third PDSCH is less than or equal to X MHz; or the second duration is duration required by the second terminal device to process the second PDSCH, and the baseband bandwidth capability of the second terminal device for processing the PDSCH is greater than or equal to Y MHz. Specifically, a value of the second duration may be. It may be understood that the first duration is time required by the first terminal device to process, with a small baseband processing capability through time relaxation, a PDSCH that exceeds a baseband bandwidth capability of the first terminal device, and the second duration is time required by the terminal device to process, with a sufficient baseband processing capability, a PDSCH that does not exceed a baseband bandwidth capability of the terminal device. The first PDSCH and the third PDSCH may be a same PDSCH or different PDSCHs.

Specifically, for example, the second duration is a processing time capability of the second terminal device for processing the second PDSCH, or the second duration is duration in which the first terminal device processes the third PDSCH with a baseband bandwidth capability of X MHz. The second duration may be a minimum time $T_{proc,1}$ from a last symbol in which the terminal device receives the PDSCH to a $2^{nd}$ symbol in which the terminal device sends feedback information (for example, HARQ-ACK information) carrying the PDSCH, and is denoted as:

$$T_{proc,1} = (N_1 + d_{1,1} + d_2)(2048 + 144) \cdot \kappa 2^{-\mu} \cdot T_c + T_{ext}$$

$N_1$ is determined based on a subcarrier spacing (subcarrier spacing, SCS) parameter, a PDSCH processing capability supported by the second terminal device, a location of an additional DMRS, and the like. $d_{1,1}$ and $d_2$ are compensation parameters, and values of the two compensation parameters are related to a PDSCH processing capability supported by the first terminal device, a PDSCH time domain location, and the like. $T_c$ is a time unit in the NR system, a constant $\kappa = T_s/T_c = 64$, and $T_{ext}$ is an additional time compensation parameter. For example, for possible values of $T_{proc,1}$, refer to Table 1.

Table 1

| PDSCH processing time of UE | PDSCH processing capability 1 of UE | | PDSCH processing capability 2 of UE | |
|---|---|---|---|---|
| | SCS 15 kHz | SCS 30 kHz | SCS 15 kHz | SCS 30 kHz |
| Only for a pre-PDSCH DMRS | 0.57 ms | 0.36 ms | 0.18 ms to 0.29 ms | 0.08 ms to 0.17 ms |
| Having an additional PDSCH DMRS | 0.92 ms | 0.46 ms | 0.85 ms | 0.4 ms |

For a relaxed processing time manner, refer to examples in FIG. 3. Processing of the first PDSCH is completed with a small baseband processing capability by extending a processing time. Specifically, the first duration includes at least one time period, for example, includes a first time period and a second time period. The terminal device processes a first part of the first PDSCH in the first time period, and processes a second part of the first PDSCH in the second time period. The first part and the second part do not overlap. For processing of the first PDSCH, the terminal device may separately process different information of the first PDSCH in the first time period and the second time period, or may separately perform different types of processing in the first time period and the second time period. For example, the terminal device demodulates and decodes the first PDSCH in the first time period, and prepares feedback information in response to the first PDSCH in the second time period. The time period may be on a per-slot (slot), symbol (symbol), or microsecond basis. For example, in a case that the first terminal device may process a maximum of X MHz data in each slot, a bandwidth of the first PDSCH is Y MHz, Y is greater than X, and the first terminal device cannot process the entire first PDSCH in one slot, the first terminal device may process the entire first PDSCH in N slots, where a value of N is related to a size of the first PDSCH and a processing capability of the first terminal device. According to the relaxed processing time method, the terminal device may process complete information of the first PDSCH, to improve receiving performance.

Specifically, a value of the first duration may be implemented in the following several manners.

In a first possible implementation, the first duration is predefined or preset. For example, a value range of the first duration is predefined in a protocol, or the value of the first duration is preset in the terminal device by an equipment vendor or a user.

In a second possible implementation, the first duration is determined according to a predefined rule. Specifically, a protocol may predefine a method for determining the first duration. For example, it is predefined in the protocol that a relationship between the first duration T1 and the second duration T2 satisfies:

$$T1 = A * T2 + offset,$$

where offset is N time units, A is greater than or equal to 1, and N is a natural number. Then, the first terminal device may determine T1 based on T2.

Further, for example, the relationship between the first duration T1 and the second duration T2 may satisfy:

T1 = A * T2, where A is greater than 1; or
T1 = T2 + offset, where offset is N time units, and N is a positive integer.

Further, optionally, A or N is related to Y/X, and A and N may be determined based on Y/X. For example, A = Y/X or N = Y/X. For another example, A = floor(Y/X), or N = floor(Y/X), where floor represents rounding down. For another example, A = ceil(Y/X), or N = ceil(Y/X), where ceil represents rounding up. Based on the PDSCH processing capability of the first terminal device, the value of the first duration may be determined based on the second duration, so that the first terminal device with a small baseband capability may complete processing of the PDSCH through time relaxation.

In a third possible implementation, the first duration is determined based on signaling from the network device. Specifically, the network device may indicate the first duration to the first terminal device by using a radio resource control (radio resource control, RRC) message or downlink control information (downlink control information, DCI).

Optionally, a maximum bandwidth supported by the first terminal device for processing the PDSCH with post-fast Fourier transform data buffering (post-FFT data buffering) is greater than or equal to Y MHz. For example, the bandwidth of the post-FFT data buffering is 20 MHz, and a transmission bandwidth of the PDSCH is also 20 MHz. Therefore, the terminal device may buffer complete PDSCH information, to subsequently process the complete PDSCH through time relaxation.

For S403: The first terminal device sends the feedback information in response to the first PDSCH to the network device; and accordingly, the network device receives the feedback information from the first terminal device.

It should be noted that S403 is an optional step. The first terminal device may give a feedback to the first PDSCH, or may not give the feedback. For example, a terminal device in an idle mode does not give a feedback when receiving a first PDSCH carrying a broadcast service, but a terminal device in an RRC connected mode may give a feedback when receiving a first PDSCH carrying a unicast service.

In an implementation, the feedback information may be HARQ-ACK information of the first PDSCH.

An interval between a sending time of the first PDSCH and a receiving time of the feedback information is greater than or equal to the first duration.

In an implementation, the first terminal device sends, based on third duration, the feedback information in response to the first PDSCH to the network device, where the third duration is greater than or equal to the first duration. The third duration may be predefined, or may be determined based on the signaling from the network device. For example, the network device may indicate the third duration to the first terminal device by using a radio resource control (radio resource control, RRC) message, downlink control information (downlink control information, DCI), or the like.

In an implementation, the first PDSCH carries a random access response (random access response, RAR) message, that is, the first PDSCH is a message 2 (Message 2) or a message B (Message B) in a random access procedure, and the feedback information is a message 3 (Message 3) in the random access procedure. Optionally, the first duration may be considered as minimum duration between receiving the Msg2 or the MsgB to sending the Msg3 by the first terminal device, or may be considered as duration in which the first terminal device processes only the Msg2 or the MsgB. Optionally, the second duration may be considered as minimum duration between receiving the Msg2 or the MsgB to sending the Msg3 by the second terminal device, or may be considered as duration in which the second terminal device processes only the Msg2 or the MsgB. The third duration may be considered as a time interval, indicated by a base station, between receiving the Msg2 or the MsgB and sending the Msg3 by the first terminal device.

Further, the network device does not schedule the first terminal device in the first duration. The terminal device does not receive another first PDSCH or sending another PUSCH in the first duration. Because time for processing the first PDSCH by the first terminal device through time relaxation is long, if the network device schedules the first terminal device in this time period, the first terminal device may fail to complete processing of the first PDSCH, or the first terminal device cannot successfully receive new scheduling information, causing resource waste or a communication failure. The network device may reserve the processing time, to avoid a transmission conflict of information or data, and improve resource utilization of a network system.

According to this embodiment of this application, the first terminal device having a small baseband bandwidth for processing the first PDSCH can complete processing of the first PDSCH in relaxed processing time. In this way, data receiving performance is improved while the terminal saves energy, and the first PDSCH does not need to be repeatedly sent, thereby avoiding resource waste and improving communication efficiency.

Further, the terminal device and the network device may further exchange corresponding processing capability information, so that the network device learns of a processing capability of the terminal device in advance to facilitate more suitable scheduling processing, thereby improving communication efficiency. Specifically, this may include the following steps.

Optionally, S501: The network device sends first indication information to the first terminal device; and accordingly, the first terminal device receives the first indication information from the network device, where the first indication information indicates to report a post-FFT data buffering bandwidth capability.

S502: The first terminal device sends first information to the network device; and accordingly, the network device receives the first information from the first terminal device, where the first information indicates the post-FFT data buffering bandwidth capability of the first terminal device.

For example, UE receives first indication information from a base station, and in response to the first indication information, the UE sends first information to the base station, to indicate that a post-FFT data buffering bandwidth capability of the UE is 5 MHz. In this way, the network device may learn of the post-FFT data buffering bandwidth capability of the terminal device by using the first information for better data scheduling. In a possible implementation, a candidate value of the post-FFT data buffering bandwidth capability is predefined as 20 MHz or 5 MHz. In this case, the terminal device may indicate the first information by using one bit (bit), and indicate, by using a value (bit state) of the bit, that the post-FFT data buffering bandwidth capability of the terminal device is 20 MHz or 5 MHz, thereby reducing signaling consumption. Optionally, the candidate value of the post-FFT data buffering bandwidth capability may further include M MHz, where $5 < M < 20$.

Optionally, S503: The network device sends second indication information to the first terminal device; and accordingly, the first terminal device receives the second indication information from the network device, where the second indication information indicates to report whether processing the PDSCH in the first duration is supported, or indicates whether processing the PDSCH in relaxed processing duration is supported.

S504: The first terminal device sends second information to the network device; and accordingly, the network device receives the second information from the first terminal device, where the second information indicates that the first terminal device supports processing a PDSCH in the first duration, or the second information indicates that the first terminal device supports processing a PDSCH through time relaxation. In a possible implementation, when the first terminal device does not support processing the PDSCH through time relaxation, this may also be reported to the network device by using the second information. For example, the second information indicates that the first terminal device does not support processing the PDSCH in the first duration.

The network device may indicate or trigger, by using the second indication information, the first terminal device to report whether the first terminal device supports processing the PDSCH through time relaxation. S503 is an optional step. Alternatively, the first terminal device may actively report whether the first terminal device supports processing the PDSCH through time relaxation, so that the network device may determine, based on a capability of the first terminal device, time for processing the PDSCH by the first terminal device. This may avoid scheduling the first terminal device in a process of processing the PDSCH by the first terminal device, avoid unnecessary resource waste, and ensure receiving performance of the terminal device.

Optionally, S505: The first terminal device sends third information to the network device, and correspondingly, the network device receives the third information from the first terminal device, where the third information indicates the first duration.

Optionally, S506: The network device sends third indication information to the first terminal device, and the third indication information indicates the third duration, that is, a timing $K_1$ between the PDSCH and the feedback information, where $K_1$ is not less than $T_{proc,1}$. The network device may determine the third duration based on the third information that is from the first terminal device in S505. Alternatively, when S505 is not performed, the network device may determine the third duration of the first terminal device according to a predefined rule, and further determine $K_1$ based on the third duration. The timing $K_1$ that is not less than the PDSCH processing capability supported by the first terminal device is set to reserve a sufficient processing time for the first terminal device, to avoid scheduling the first terminal device before the first terminal device completes processing of the PDSCH, thereby avoiding unnecessary resource waste. The first duration described above is duration used by the terminal device to process the PDSCH, and the first duration is less than or equal to the third duration. Optionally, after receiving the third indication information, the first terminal device may determine the third duration based on the third indication information.

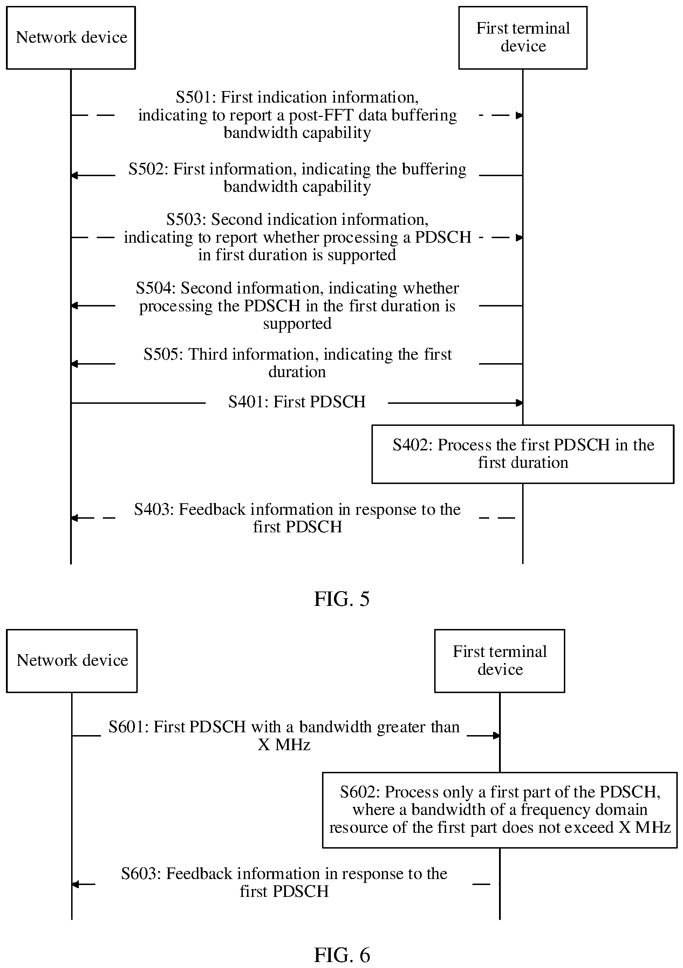

It should be noted that the foregoing steps S501 and S502, S503 and S504, and S505 are all optional steps, and may be separately implemented or may be implemented in a combined manner. A sequence of the three groups of steps is not limited in this application. As shown in FIG. 5, S501 and S502, S503 and S504, and S505 may be separately combined with S401 to S403 for implementation, or may be jointly combined with S401 to S403 for implementation. A sequence of these steps is not limited in this application. By exchanging capability information of the terminal device, the network device may learn of a data channel processing capability of the terminal device, to properly predict time for receiving the feedback information after the PDSCH is sent, thereby avoiding scheduling the first terminal device in a process in which the first terminal device processes the PDSCH, avoiding unnecessary resource waste, and ensuring transmission performance of the terminal device.

The foregoing describes the method for processing the PDSCH by the first terminal device in the relaxed processing time. As shown in FIG. 3B, for a terminal device with a small baseband capability for processing a PDSCH, an embodiment of this application further provides a communication method. The terminal device may maintain an existing processing time, and process the PDSCH with only a PDSCH baseband processing capability supported by the terminal device. For example, a baseband capability of UE for processing the PDSCH is 5 MHz, and a transmission bandwidth of the PDSCH is 20 MHz. In this case, the terminal device may process only 5 MHz of the PDSCH, that is, process only a part of information in the PDSCH, and does not process another part of the information, to avoid additional time consumption. This application further provides a method for further determining a specific part of the PDSCH information that is processed by the terminal device. As shown in FIG. 6, the method specifically includes the following steps.

S601: A network device sends a PDSCH to a first terminal device; and accordingly, the first terminal device receives the PDSCH from the network device.

S602: The first terminal device processes only a first part of the PDSCH, where a bandwidth of a frequency domain resource occupied by the first part does not exceed X MHz.

Optionally, S603: The first terminal device sends feedback information in response to the PDSCH to the network device; and accordingly, the network device receives the feedback information from the first terminal device.

The communication method provided in S601 to S603 is applicable to a terminal device having a post-FFT buffer bandwidth capability of Y MHz but having a small baseband bandwidth capability for processing the PDSCH, and is also applicable to a terminal device having a post-FFT buffer bandwidth of X MHz. For the latter terminal device, because the post-FFT buffer bandwidth capability is insufficient, complete PDSCH information cannot be buffered, and a specific part of the PDSCH information to be processed needs to be selected, to maximize receiving performance. For ease of description, some parameters such as X, Y, and a bandwidth capability are reused below. For specific meanings of the parameters, refer to the foregoing detailed explanations. Details are not described again.

For S601, refer to the foregoing detailed description of S401.

For S602: The first terminal device processes only the first part of the PDSCH, where the bandwidth of the frequency domain resource occupied by the first part does not exceed X MHz.

Specifically, the terminal device may determine, by using the following several methods, the first part that needs to be processed in the PDSCH.

In a first possible implementation, the first terminal device determines, based on an internal algorithm, to buffer and process the first part of the PDSCH.

In a second possible implementation, the terminal device determines the first part according to a predefined rule.

In a third possible implementation, the terminal device determines the first part based on first signaling from the network device, where the first signaling is a system information block SIB, an RRC message, a medium access control control element MAC CE, or downlink indication information DCI.

For a specific location of the first part in the PDSCH, the first part may be a lowest X MHz in a first frequency domain resource, or the first part may be a highest X MHz in the first frequency domain resource.

When a buffer capability (for example, the post-FFT buffer bandwidth capability) of the first terminal device is X MHz, in a possible implementation, the network device schedules the PDSCH across slots. Specifically, the network device sends a PDCCH to the first terminal device in a first slot, the first terminal device receives the PDCCH from the network device in the first slot accordingly, and DCI carried on the PDCCH is used to schedule the PDSCH; and the network device sends the PDSCH to the first terminal device in a second slot, and accordingly, the first terminal device receives the PDSCH from the network device in the second slot, where the first slot and the second slot are different slots. The PDCCH and the PDSCH scheduled by the PDCCH are sent in different slots, so that time for demodulating and decoding the PDCCH may be reserved for the first terminal device, and time-frequency resource allocation information of the PDSCH indicated by the DCI carried on the PDCCH is obtained. Otherwise, the first terminal device may not determine, in a timely manner, a frequency resource on which the PDSCH is to be received, and therefore cannot successfully receive the PDSCH. Therefore, according to this method, a success rate of receiving the PDSCH by the terminal device can be improved, and communication efficiency can be improved.

For step S603: The first terminal device sends the feedback information in response to the PDSCH to the network device; and accordingly, the network device receives the feedback information from the first terminal device.

It should be noted that S603 is an optional step. The first terminal device may give a feedback to the PDSCH, or may not give the feedback. For example, a terminal device in an idle mode does not give a feedback when receiving a PDSCH carrying a broadcast service, but a terminal device in an RRC connected mode may give a feedback when receiving a PDSCH carrying a unicast service.

The network device may predict a transmission time of the feedback information in the second duration without prolonging a waiting time. For a meaning of the second duration, refer to the foregoing detailed description.

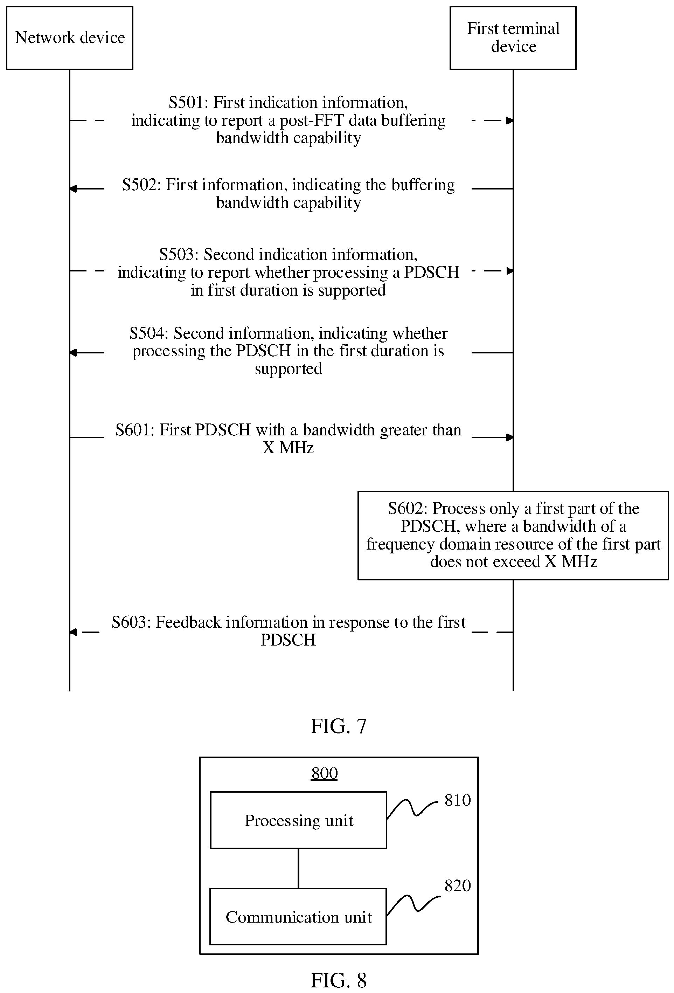

According to the communication method provided in S601 to S603, the terminal device may process the PDSCH within a capability range without consuming an additional processing time, and the network device does not need to re-estimate a processing time of the terminal device, thereby reducing implementation complexity on a network side. As shown in FIG. 7, the communication method provided in S601 to S603 may be separately implemented or combined with the foregoing steps S501 and S502, and S503 and S504. A sequence of these steps is not limited in this application. In this way, the network device may deliver a PDSCH based on a processing capability of the terminal device, or determine time for receiving the feedback information from the terminal device.

For a terminal device with a low baseband capability for processing a data channel, the foregoing describes two processing manners.

Manner 1: The terminal device processes only a part of the PDSCH within a baseband bandwidth capability range, and does not process an additional part.

Manner 2: The terminal device processes the PDSCH through time relaxation, or the terminal device processes the PDSCH in the first duration.

The terminal device may select from the two communication methods based on a capability of the terminal device. Further, this application further provides an implementation in which the terminal device may determine a PDSCH processing method based on an RRC mode and/or a service type corresponding to the PDSCH.

For example, when the terminal device is in an RRC idle mode or an RRC inactive mode, the terminal device determines to use Manner 2. When the terminal device is in the RRC connected mode, the terminal device determines, based on the service type of the PDSCH, to use Manner 1 or Manner 2. For example, when a type of a service carried on the PDSCH is a unicast service, the terminal device determines to use Manner 2, or when a type of a service carried on the PDSCH is a multicast service, the terminal device determines to use Manner 1.

When the terminal device is in the RRC idle mode or the RRC inactive mode, data sent by the network device to the terminal device is mainly a broadcast service, and the terminal device does not perform feedback. In this case, the terminal device has sufficient time to process the PDSCH. Therefore, the manner of time relaxation in Manner 2 may be used to receive as many PDSCHs as possible, or receive a complete PDSCH, thereby improving receiving performance.

When the terminal device is in the RRC connected mode, data sent by the network device to the terminal device may be a broadcast service or a unicast service. In this case, for the broadcast service with low importance, the processing manner in Manner 1 may be used to reduce the processing time. For the unicast service with high importance, the manner of time relaxation in Manner 2 may be used to receive as many PDSCHs as possible, or receive a complete PDSCH, thereby improving receiving performance. In another possible implementation, when being in the RRC connected mode, the terminal device may further determine, in a processing process, whether a new PDSCH arrives. For example, when the terminal device receives and processes a first PDSCH carrying a broadcast service, if the terminal device finds that a second PDSCH carrying a unicast service arrives, the terminal device may process the first PDSCH in Manner 1, and reserve a processing resource and time to process the second PDSCH.

In another possible implementation, the terminal device may determine the PDSCH processing method based on a priority of a service carried on the PDSCH. The priority of the service may be predefined, or may be configured by the network device. For example, Manner 2 may be used for a service with a high priority, and Manner 1 may be used for a service with a low priority. For example, if a priority of paging is higher than a priority of a SIB, when the terminal device receives a PDSCH carrying the paging and a PDSCH carrying the SIB, the terminal device preferentially processes the PDSCH carrying the paging, or processes the PDSCH carrying the paging in Manner 2, and processes the PDSCH carrying the SIB in Manner 1.

The RRC mode, the service type corresponding to the PDSCH, and the service priority may be separately used to determine the PDSCH processing method, or may be used in a combined manner. In this way, the processing resource of the terminal device may be more flexibly used, a PDSCH with a high priority is preferentially processed, and receiving performance of the terminal device is improved.

Different embodiments described above may be used in combination or separately. In addition, a relationship between steps of each embodiment is not forcibly limited, that is, not all steps are mandatory, and some of the steps may be selected according to actual requirements for implementation.

To implement the functions in the methods provided in embodiments of this application, the network device, the terminal device, or the communication apparatus may include a hardware structure and/or a software module, and the functions are implemented in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, module division is an example, and is merely a logical function division. In actual implementation, another division manner may be used. In addition, functional modules in embodiments of this application may be integrated into one processor, or may exist alone physically, or two or more modules may be integrated into one module. The integrated module may be implemented in a form of hardware, or may be implemented in a form of a software functional module.

As shown in FIG. 8, an embodiment of this application further provides an apparatus 800. The communication apparatus 800 may be the terminal device in FIG. 1, and is configured to implement the method for the terminal device in the foregoing method embodiments. Alternatively, the communication apparatus may be the network device in FIG. 1, and is configured to implement the method corresponding to the network device in the foregoing method embodiments. For a specific function, refer to descriptions in the foregoing method embodiments.

Specifically, the apparatus 800 may include a processing unit 810 and a communication unit 820. In this embodiment of this application, the communication unit may also be referred to as a transceiver unit, and may include a sending unit and/or a receiving unit, which are respectively configured to perform sending and receiving steps of the network device or the terminal device in the foregoing method embodiments. The following describes in detail the communication apparatus provided in embodiments of this application with reference to FIG. 8 to FIG. 9.

In some possible implementations, behavior and functions of the terminal device in the foregoing method embodiments may be implemented by using the communication apparatus 800, for example, the methods performed by the terminal device in embodiments in FIG. 4 to FIG. 7 are implemented. The communication apparatus 800 may be a terminal device, or may be a component (for example, a chip or a circuit) used in the terminal device, or may be a chip or a chip set in the terminal device or a part that is of the chip and that is configured to perform a related method function. The communication unit 820 may be configured to perform a receiving or sending operation performed by the terminal device in embodiments shown in FIG. 4 to FIG. 7, and the processing unit 810 may be configured to perform an operation other than the receiving and sending operations performed by the terminal device in embodiments shown in FIG. 4 to FIG. 7. For example:

the communication unit is configured to receive a first PDSCH from the network device; and
the processing unit is configured to process the first PDSCH in first duration, where
a maximum baseband bandwidth supported by the first terminal device is X megahertz MHz, and a bandwidth of a frequency domain resource occupied by the first PDSCH is Y MHz, where X is less than Y.

In a possible implementation, the first duration is predefined or preset, and the first duration is determined according to a predefined rule, or the first duration is determined based on signaling from the network device.

In a possible implementation, the first duration T1 and the second duration T2 satisfy: T1 = A * T2, where A is greater than 1; or T1 = T2 + offset, where offset is N time units, and N is a positive integer. Further, A and N may be determined based on a ratio of Y to X, for example, A = Y/X, or N = Y/X.

In a possible implementation, a maximum bandwidth that is of post-fast Fourier transform data buffering (post-FFT data buffering) and that is supported by the first terminal device for processing a PDSCH is not less than Y MHz. Optionally, X = 5, and Y = 20.

In a possible implementation, the method further includes: The first terminal device sends first information to the network device. The first information indicates a post-FFT data buffering bandwidth capability of the first terminal device. Further, before this, the first terminal device further receives first indication information from the network device. The first indication information indicates to report the post-FFT data buffering bandwidth capability.

In some possible implementations, behavior and functions of the network device in the foregoing method embodiments may be implemented by using the communication apparatus 800, for example, the methods performed by the network device in embodiments in FIG. 4 to FIG. 7 are implemented. For example, the communication apparatus 800 may be a network device, or may be a component (for example, a chip or a circuit) used in the network device, or may be a chip or a chip set in the network device or a part that is of the chip and that is configured to perform a related method function. The communication unit 820 may be configured to perform a receiving or sending operation performed by the network device in embodiments shown in FIG. 4 to FIG. 7, and the processing unit 810 may be configured to perform an operation other than the receiving and sending operations performed by the network device in embodiments shown in FIG. 4 to FIG. 7. For example:

the communication unit is configured to send a first PDSCH to a first terminal device, and the network device receives feedback information from the first terminal device in response to the first PDSCH; and
the processing unit is configured to determine that an interval between a sending time of the PDSCH and a receiving time of the feedback information is greater than or equal to first duration, the first duration is greater than second duration, a baseband bandwidth for processing the first PDSCH by the first terminal device is X megahertz MHz, and a bandwidth of a frequency domain resource occupied by the PDSCH is Y MHz.

In a possible implementation, the second duration is time required by a second terminal device to process a second PDSCH in a baseband bandwidth not less than Y MHz, the second duration is duration for processing a third PDSCH by the first terminal device in a baseband bandwidth of X MHz, and a bandwidth of a frequency domain resource occupied by the second PDSCH is less than or equal to X MHz.

In a possible implementation, the first duration is predefined or preset, and the first duration is determined according to a predefined rule, or the first duration is determined based on signaling from the network device.

In a possible implementation, the first duration T1 and the second duration T2 satisfy:
T1 = A * T2, where A is greater than 1; or T1 = T2 + offset, where offset is N time units, and N is a positive integer.

It should be understood that descriptions of the apparatus embodiments correspond to descriptions of the method embodiments. For apparatus structures used to implement the terminal device and the network device in FIG. 4 to FIG. 7, refer to the apparatus 800. Therefore, for content that is not described in detail, refer to the foregoing method embodiments. For brevity, details are not described herein again.

The communication unit may also be referred to as a transceiver module, a transceiver, a transceiver machine, a transceiver apparatus, or the like. The processing unit may also be referred to as a processor, a processing board, a processing module, a processing apparatus, or the like. Optionally, a device that is in the communication unit 820 and that is configured to implement a receiving function may be considered as a receiving unit, and a device that is in the communication unit 820 and that is configured to implement a sending function may be considered as a sending unit, in other words, the communication unit 820 includes a receiving unit and a sending unit. The communication unit sometimes may also be referred to as a transceiver machine, a transceiver, a transceiver circuit, or the like. The receiving unit sometimes may also be referred to as a receiver machine, a receiver, a receive circuit, or the like. The sending unit sometimes may also be referred to as a transmitter machine, a transmitter, a transmit circuit, or the like.

The foregoing is merely an example. The processing unit 810 and the communication unit 820 may further perform other functions. For more detailed descriptions, refer to the related descriptions in the method embodiments shown in FIG. 4 to FIG. 7. Details are not described herein.

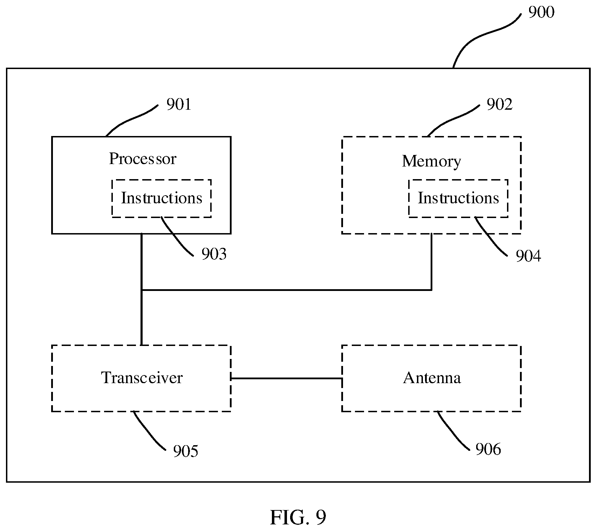

FIG. 9 shows an apparatus 900 according to an embodiment of this application. The apparatus shown in FIG. 9 may be an implementation of a hardware circuit of the apparatus shown in FIG. 8. The communication apparatus is applicable to the foregoing flowcharts, and performs functions of the terminal device or the network device in the foregoing method embodiments. For ease of description, FIG. 9 shows only main components of the communication apparatus.

FIG. 9 is a diagram of a structure of a communication apparatus according to an embodiment of this application. It should be noted that a part represented by a dashed box in FIG. 9 is optional, and details are not described below.

The communication apparatus 900 includes one or more processors 901. The processor 901 may be configured to perform internal processing of the apparatus, to implement a specific control processing function. Optionally, the processor 901 includes instructions 903. Optionally, the processor 901 may store data. Optionally, the processor 901 may be a general-purpose processor, a dedicated processor, or the like. Optionally, different processors may be independent devices, may be located at different physical locations, or may be located on different integrated circuits. Optionally, different processors may be integrated into one or more processors, for example, integrated into one or more integrated circuits.

Optionally, the communication apparatus 900 further includes one or more memories 902, configured to store instructions 904. Optionally, the memory 902 may further store data. The processor and the memory may be separately disposed, or may be integrated together.

Optionally, the communication apparatus 900 may further include a transceiver 905 and/or an antenna 906. The transceiver 905 may be configured to send information to another apparatus or receive information from another apparatus.

Optionally, the communication apparatus 900 may further include one or more of the following components: a wireless communication module, an audio module, an external memory interface, an internal memory, a universal serial bus (universal serial bus, USB) interface, a power management module, an antenna, a speaker, a microphone, an input/output module, a sensor module, a motor, a camera, a display, or the like. The components may be implemented by hardware, software, or a combination of software and hardware.

The processor 901 executes the instructions stored in the communication apparatus 900, in other words, the instructions stored in the communication apparatus may be run on the processor 901, so that the communication apparatus 900 performs the methods described in the foregoing embodiments. Optionally, the instructions are the instructions 903 in the processor, or the instructions are the instructions 904 in the memory.

In embodiments of this application, the instructions may also be a computer program, code, program code, a program, an application program, software, or an executable file. For example, a computer program or code stored in the communication apparatus 900. Other parts are not described herein again.

When the communication apparatus 900 is configured to implement the method shown in FIG. 4 to FIG. 7, the processor 901 is configured to execute the computer program or the instructions stored in the memory to perform a function of the terminal device or the network device in the foregoing method embodiments. Specifically, the processor 901 may be configured to implement a function of the processing unit 810. An interface circuit 902 is configured to receive a signal from a communication apparatus other than the communication apparatus, and transmit the signal to the processor, or send a signal from the processor to a communication apparatus other than the communication apparatus. Specifically, the interface circuit 902 may be configured to implement a function of the communication unit 820.

The processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA), or another programmable logic device or a transistor logic device. The general-purpose processor may be a microprocessor or any regular processor.

The memory in embodiments of this application may be a random access memory (Random Access Memory, RAM), a flash memory, a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), a register, a hard disk, a removable hard disk, or any other form of storage medium well known in the art. For example, a storage medium is coupled to a processor, so that the processor can read information from the storage medium and write information into the storage medium. Certainly, the storage medium may also be a component of the processor. The processor and the storage medium may be disposed in an ASIC. In addition, the ASIC may be located in a network device or a terminal device. Alternatively, the processor and the storage medium may exist in a network device or a terminal device as discrete components.

A person skilled in the art should understand that embodiments of this application may be provided as methods, systems, or computer program products. Therefore, this application may use a form of hardware-only embodiments, software-only embodiments, or embodiments with a combination of software and hardware. Moreover, this application may use a form of a computer program product that is implemented on one or more computer-usable storage media (including but not limited to a disk memory, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. These computer program instructions may be provided for a general-purpose computer, a dedicated computer, an embedded processor, or a processor of any other programmable data processing device to generate a machine, so that the instructions executed by a computer or a processor of any other programmable data processing device generate an apparatus for implementing a specific function in one or more processes in the flowcharts and/or in one or more blocks in the block diagrams.

The computer program or the instructions may alternatively be stored in a computer-readable memory that can instruct the computer or another programmable data processing device to work in a specific manner, so that the instructions stored in the computer-readable memory generate an artifact that includes an instruction apparatus. The instruction apparatus implements a specified function in one or more procedures in the flowcharts and/or in one or more blocks in the block diagrams.

## Claims

1. A communication method, comprising:

   receiving, by a first terminal device, a first physical downlink data channel PDSCH from a network device; and
   processing, by the first terminal device, the first PDSCH in first duration, wherein a maximum baseband bandwidth for processing the PDSCH by the first terminal device is X megahertz MHz, a bandwidth of a frequency domain resource occupied by the PDSCH is Y MHz, X is less than Y, and the first duration is greater than second duration.

2. The method according to claim 1, wherein

   the second duration is time in which a second terminal device processes a second PDSCH in a maximum baseband bandwidth not less than Y MHz;
   the second duration is duration for processing a third PDSCH by the first terminal device, and a bandwidth of a frequency domain resource occupied by the third PDSCH is less than or equal to X MHz; or
   the second duration is determined based on a capability of a terminal device, a subcarrier spacing, and a demodulation reference signal DMRS configuration of a PDSCH, and the second duration may be 0.57 milliseconds ms, 0.36 ms, 0.18 ms, 0.08 ms, 0.92 ms, 0.46 ms, 0.85 ms, or 0.4 ms.

3. The method according to claim 2, wherein a maximum baseband bandwidth supported by the second terminal device for processing a PDSCH is greater than a maximum baseband bandwidth supported by the first terminal device for processing a PDSCH.

4. The method according to any one of claims 1 to 3, wherein

   the first duration is predefined or preset;
   the first duration is determined according to a predefined rule; or
   the first duration is determined based on signaling from the network device.

5. The method according to any one of claims 1 to 4, wherein the first duration T1 and the second duration T2 satisfy:

    T1 = A * T2, wherein A is greater than 1; or
    T1 = T2 + offset, wherein offset is N time units, and N is a positive integer.

6. The method according to claim 5, wherein A = Y/X, or N = Y/X.

7. The method according to any one of claims 1 to 6, wherein a maximum bandwidth that is of post-fast Fourier transform data buffering (post-FFT data buffering) and that is supported by the first terminal device for processing a PDSCH is not less than Y MHz.

8. The method according to any one of claims 1 to 7, wherein X = 5, and Y = 20.

9. The method according to any one of claims 1 to 8, wherein the method further comprises:
    sending, by the first terminal device, first information to the network device, wherein the first information indicates a post-FFT data buffering bandwidth capability of the first terminal device.

10. The method according to any one of claims 1 to 9, wherein the method further comprises:
    sending, by the first terminal device, second information to the network device, wherein the second information indicates that the first terminal device supports processing a PDSCH in the first duration.

11. The method according to any one of claims 1 to 10, wherein the method further comprises:
    sending, by the first terminal device, third information to the network device, wherein the third information indicates the first duration.

12. The method according to claim 11, wherein the first information, the second information, and/or the third information are/is carried in at least one of the following:

    a physical random access channel PRACH;
    a message A Msg A in a random access procedure;
    a message 3 Msg 3 in a random access procedure; or
    a radio resource control RRC message.

13. The method according to any one of claims 1 to 12, wherein the method further comprises:
    sending receiving status information of the first PDSCH based on third duration, wherein the third duration is not less than the first duration.

14. A communication method, comprising:

    sending, by a network device, a first PDSCH to a first terminal device; and
    receiving, by the network device, feedback information from the first terminal device in response to the first PDSCH, wherein an interval between a sending time of the PDSCH and a sending time of the feedback information is greater than or equal to first duration, the first duration is greater than second duration, a baseband bandwidth for processing the first PDSCH by the first terminal device is X megahertz MHz, a bandwidth of a frequency domain resource occupied by the PDSCH is Y MHz, and X is less than Y.

15. The method according to claim 14, wherein

    the second duration is time in which a second terminal device processes a second PDSCH in a baseband bandwidth not less than Y MHz;
    the second duration is duration for processing a third PDSCH by the first terminal device, and a bandwidth of a frequency domain resource occupied by the third PDSCH is less than or equal to X MHz; or
    the second duration is determined based on a capability of a terminal device, a subcarrier spacing, and a demodulation reference signal DMRS configuration of a PDSCH, and the second duration is 0.57 milliseconds ms, 0.36 ms, 0.18 ms, 0.08 ms, 0.92 ms, 0.46 ms, 0.85 ms, or 0.4 ms.

16. The method according to claim 15, wherein a maximum baseband bandwidth supported by the second terminal device for processing a PDSCH is greater than a maximum baseband bandwidth supported by the first terminal device for processing a PDSCH.

17. The method according to any one of claims 14 to 16, wherein

the first duration is predefined or preset;
the first duration is determined according to a predefined rule; or
the first duration is determined based on signaling from the network device.

18. The method according to any one of claims 14 to 17, wherein the first duration T1 and the second duration T2 satisfy:

T1 = A * T2, wherein A is greater than 1; or
T1 = T2 + offset, wherein offset is N time units, and N is a positive integer.

19. The method according to claim 18, wherein A = Y/X, or N = Y/X.

20. The method according to any one of claims 14 to 19, wherein a maximum bandwidth that is of post-fast Fourier transform data buffering (post-FFT data buffering) and that is supported by the first terminal device for processing a PDSCH is not less than Y MHz.

21. The method according to any one of claims 14 to 20, wherein X = 5, and Y = 20.

22. The method according to any one of claims 14 to 21, wherein the method further comprises:
receiving, by the network device, first information from the first terminal device, wherein the first information indicates a post-FFT data buffering bandwidth capability of the first terminal device.

23. The method according to any one of claims 14 to 22, wherein the method further comprises:
receiving, by the network device, second information from the first terminal device, wherein the second information indicates that the first terminal device supports processing a PDSCH in the first duration.

24. The method according to any one of claims 14 to 23, wherein the method further comprises:
receiving, by the network device, third information from the first terminal device, wherein the third information indicates the first duration.

25. The method according to claim 24, wherein the first information, the second information, and/or the third information are/is carried in at least one of the following:

a physical random access channel PRACH;
a message A Msg A in a random access procedure;
a message 3 Msg 3 in a random access procedure; or
a radio resource control RRC message.

26. The method according to any one of claims 14 to 25, wherein the method further comprises:
sending receiving status information of the first PDSCH based on third duration, wherein the third duration is not less than the first duration.

27. A communication apparatus, wherein the communication apparatus comprises a processor, and the processor is configured to run a computer program or instructions, to enable the communication apparatus to perform the communication method according to any one of claims 1 to 13.

28. A communication apparatus, wherein the communication apparatus comprises a processor, and the processor is configured to run a computer program or instructions, to enable the communication apparatus to perform the communication method according to any one of claims 14 to 26.

29. A computer-readable storage medium, wherein the computer-readable storage medium stores computer instructions or a program; and when the computer instructions or the program is run on a computer, the communication method according to any one of claims 1 to 13 is performed, or the communication method according to any one of claims 14 to 26 is performed.

Network device

Terminal device

FIG. 1

20 MHz

RF

BB for
PXSCH

5 MHz

FIG. 2

BW > X
MHz

PDSCH

Time for UE to buffer and
process the PDSCH

PUCCH

Slot X | Slot X + 1 | ... | Slot X +
N + 1

Time
domain

The UE receives and processes the PDSCH

FIG. 3A

BW > X MHz { | PDSCH | Existing processing time → | PUCCH |

| Slot X | Slot X + 1 | ... | Slot X + N + 1 | Time domain

## FIG. 3B

Network device

First terminal device

S401: First PDSCH with a bandwidth greater than X MHz →

S402: Process the first PDSCH in first duration, where a maximum baseband bandwidth supported by the first terminal device is X MHz

← S403: Feedback information in response to the first PDSCH

## FIG. 4

| Network device | | First terminal device |
|---|---|---|

S501: First indication information, indicating to report a post-FFT data buffering bandwidth capability

S502: First information, indicating the buffering bandwidth capability

S503: Second indication information, indicating to report whether processing a PDSCH in first duration is supported

S504: Second information, indicating whether processing the PDSCH in the first duration is supported

S505: Third information, indicating the first duration

S401: First PDSCH

S402: Process the first PDSCH in the first duration

S403: Feedback information in response to the first PDSCH

FIG. 5

| Network device | | First terminal device |
|---|---|---|

S601: First PDSCH with a bandwidth greater than X MHz

S602: Process only a first part of the PDSCH, where a bandwidth of a frequency domain resource of the first part does not exceed X MHz

S603: Feedback information in response to the first PDSCH

FIG. 6

| Network device | | First terminal device |
|---|---|---|

S501: First indication information, indicating to report a post-FFT data buffering bandwidth capability

S502: First information, indicating the buffering bandwidth capability

S503: Second indication information, indicating to report whether processing a PDSCH in first duration is supported

S504: Second information, indicating whether processing the PDSCH in the first duration is supported

S601: First PDSCH with a bandwidth greater than X MHz

S602: Process only a first part of the PDSCH, where a bandwidth of a frequency domain resource of the first part does not exceed X MHz

S603: Feedback information in response to the first PDSCH

FIG. 7

800

Processing unit — 810

Communication unit — 820

FIG. 8

900

901

Processor

Instructions

903

902

Memory

Instructions

904

Transceiver

905

Antenna

906

FIG. 9

## INTERNATIONAL SEARCH REPORT

| International application No. |
| --- |
| **PCT/CN2023/127193** |

**A. CLASSIFICATION OF SUBJECT MATTER**

H04L 5/00(2006.01)i; H04W 72/0453(2023.01)i

According to International Patent Classification (IPC) or to both national classification and IPC

**B. FIELDS SEARCHED**

Minimum documentation searched (classification system followed by classification symbols)

IPC:H04L H04W

Documentation searched other than minimum documentation to the extent that such documents are included in the fields searched

Electronic data base consulted during the international search (name of data base and, where practicable, search terms used)

CNABS; CNTXT; CNKI; VEN; ENTXTC; USTXT; EPTXT; WOTXT; 3GPP: 物理层下行共享信道, 带宽部分, 基带带宽, 射频带宽, 频域带宽, 快速傅里叶变换后的数据缓存, 最大, 能力, PDSCH, bandwidth part, BWP, baseband bandwidth, BB Bandwidth, radio frequency bandwidth, RF bandwidth, post-FFT data buffering, maximum, capacity

**C. DOCUMENTS CONSIDERED TO BE RELEVANT**

| Category* | Citation of document, with indication, where appropriate, of the relevant passages | Relevant to claim No. |
| --- | --- | --- |
| X | MODERATOR (ERICSSON). "FL Summary #1 for Potential UE Complexity Reduction Features for RedCap" *3GPP TSG-RAN WG1 Meeting #102-e E-Meeting, R1-2007090,* 21 August 2020 (2020-08-21), sections 1-7 | 1, 4, 7-13, 27, 29 |
| X | MODERATOR (ERICSSON). "FL Summary #2 for Potential UE Complexity Reduction Features for RedCap" *3GPP TSG-RAN WG1 Meeting #102-e E-Meeting, R1-2007177,* 25 August 2020 (2020-08-25), sections 1-7 | 1, 4, 7-13, 27, 29 |
| A | CN 115037426 A (HUAWEI TECHNOLOGIES CO., LTD.) 09 September 2022 (2022-09-09) entire document | 1-29 |
| A | US 2015230249 A1 (NEC CORP.) 13 August 2015 (2015-08-13) entire document | 1-29 |

☐ Further documents are listed in the continuation of Box C.   ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **23 November 2023** | **11 December 2023** |

| Name and mailing address of the ISA/CN | Authorized officer |
| --- | --- |
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2023/127193**

| Patent document cited in search report | | | Publication date (day/month/year) | Patent family member(s) | | | Publication date (day/month/year) |
|---|---|---|---|---|---|---|---|
| CN | 115037426 | A | 09 September 2022 | None | | | |
| US | 2015230249 | A1 | 13 August 2015 | EP | 2898740 | A1 | 29 July 2015 |
| | | | | EP | 2898740 | A4 | 20 April 2016 |
| | | | | US | 9872291 | B2 | 16 January 2018 |
| | | | | WO | 2014045472 | A1 | 27 March 2014 |
| | | | | US | 2017188343 | A1 | 29 June 2017 |
| | | | | US | 9900884 | B2 | 20 February 2018 |

Form PCT/ISA/210 (patent family annex) (July 2022)